# EUROPEAN PATENT APPLICATION

(11) **EP 1 281 640 A1**
(43) Date of publication of application: **05.02.2003**
(21) Application number: 01830524.3
(22) Date of filing: 03.08.2001
(51) Int. Cl.: B65G 21/14

(54) **Support device for belt conveyors**

(71) Applicant: CAVANNA S.p.A., I-28077 Prato Sesia Novara (IT)
(72) Inventor: Brolli, Elio, 28077 Prato Sesia (Novara) (IT)
(74) Representative: Bosotti, Luciano

(57) **Abstract**

The device finds application in belt conveyors (1) comprising a first conveying branch (2a) and a second conveying branch (3a) cascaded together along a general conveying path and provided, respectively, with one downstream end (2c) and one upstream end (3c) designed to move jointly along the conveying path whilst maintaining a relationship of strict contiguity with respect to one another. The device comprises a plurality of cantilever elements (10) which are able to support the conveying branches (2a,3a) of the conveyor (1) and which are selectively mobile between an extended position, in which the cantilever elements (10) are aligned with the conveying path so as to be able to support the conveying branches (2a,3a) of the conveyor (1), and a retracted position, in which the cantilever elements (10) can be disengaged from the conveying path so as not to interfere with the movement of the aforesaid downstream end (2c) and upstream end (3c) of the two conveying branches (2a,3a) of the conveyor (1).

## Description

The present invention relates to belt conveyors, and particularly regards belt conveyors comprising a first conveying branch with one downstream end and a second conveying branch cascaded to the first branch along a general conveying path, the second conveying branch having one upstream end set in a relationship of contiguity with the downstream end of the first conveying branch, the downstream end of the first conveying branch and the upstream end of the second conveying branch being jointly mobile along said general conveying path while maintaining the aforesaid relationship of contiguity.

Belt conveyors of the type described above are used in numerous technical sectors, and in particular in automatic packaging systems and plants.

In the above connection, it will therefore be appreciated that the term "belt", as it is used in the present description and in the ensuing claims, is to be understood in its widest sense, such as to comprise, for instance, a conveyor in which the belt structure is obtained in the form of a track, or else a chain or articulated elements, or yet again by resorting to filiform elements set parallel to one another, all these being configurations that have found application in the context considered.

In the solution most widely used at present, the conveyors in question comprise two motor-driven belts of the closed-loop type, each with its own conveying branch, the two conveying branches being cascaded together. In this way it is possible to vary selectively the lengths of the conveying branches of the two belts by lengthening the first conveying branch and shortening the second conveying branch, or else by shortening the first conveying branch and lengthening the second conveying branch, at the same time ensuring that the overall length of the conveyor, i.e., the sum of the lengths of the two conveying branches, will remain constant.

In conveyors of the type described above it is therefore possible to shift selectively in space the point in which the articles conveyed are transferred from the first conveying branch to the second conveying branch. This possibility, together with the possibility of controlling the two conveying branches with different speeds and, in general, with different modalities of advance, enables various manipulation operations to be performed on the flow of articles that are being conveyed.

The specific constructional characteristics of the conveyors of the type described above and the corresponding modalities of use are to be deemed altogether known to the prior art, and consequently do not need to be recalled herein, also because they are in themselves not relevant for the purposes of understanding and implementing the present invention.

The purpose of the invention is, in fact, to meet the requirement to ensure an adequate action of support for the aforesaid conveying branches of the conveyor, the above requirement becoming particularly imperative when the two conveying branches of the conveyor have, at least in certain operating conditions, a certain length and/or when the conveyor is to be used for conveying articles having a certain weight. In the aforesaid conditions (somewhat long conveying branches and/or heavy articles being conveyed) the conveying branches could undergo an undesired phenomenon of sagging due to loading.

The aforesaid requirement is not easy to meet. The downstream end of the first conveying branch and the upstream end of the second conveying branch are usually mounted on a carriage that ensures displacement thereof along the conveying path in such a way as to enable selective variation of the position of the branches in space. It is therefore essential to prevent any device designed to support the conveying branches of the conveyor from interfering with the displacement of the aforesaid carriage.

For this reason, in the prior art solutions have already been proposed in which associated to the conveying branches of the conveyor are supporting formations which also have a belt structure, for example a chain structure. The said formations extend underneath the conveying branches in question following in general the path of the closed-loop belts of which the aforesaid conveying branches form part. Also the winding path of the supporting elements may therefore be modified according to criteria basically similar to the criteria adopted for modifying the winding paths of the belts in order to vary the lengths of the conveying branches.

Regardless of any other consideration, solutions of the above type are penalized by an intrinsic, non-eliminable structural complexity, such as to render in any case far from attractive recourse to a solution of this type.

The purpose of the present invention is to provide a supporting device for belt conveyors of the type described above, which, on the one hand, makes it possible to meet fully the requirement of ensuring a secure and firm support for the conveying branches of the conveyor, and, on the other, is intrinsically simple, and hence ensures secure and reliable operation at a contained cost.

According to the present invention, the above purpose is achieved thanks to a supporting device for belt conveyors having the characteristics specifically referred to in the ensuing claims.

The present invention will now be described, purely by way of non-limiting example, with reference to the attached drawings, in which:
- Figures 1 and 2 are two perspective views illustrating the structure of a belt conveyor which can be equipped with a supporting device according to the invention;
- Figures 3 and 4 illustrate in greater detail the characteristics of the device according to the invention; and
- Figures 5 and 6 are two further perspective views designed to illustrate in greater detail the structural characteristics of some of the elements illustrated in the previous figures.

In the figures of the annexed drawings, the reference number 1 designates, as a whole, a belt conveyor. For the meaning attributed herein to the term "belt", the reader is referred to the terminological clarification made previously.

The belt conveyor 1 here represented comprises two motor-driven belts, designated by 2 and 3. The belts 2 and 3 are wound according to multiple-loop paths with a general closed-loop structure, in such a way as to define at the top two conveying branches, respectively designated by 2a and 3a.

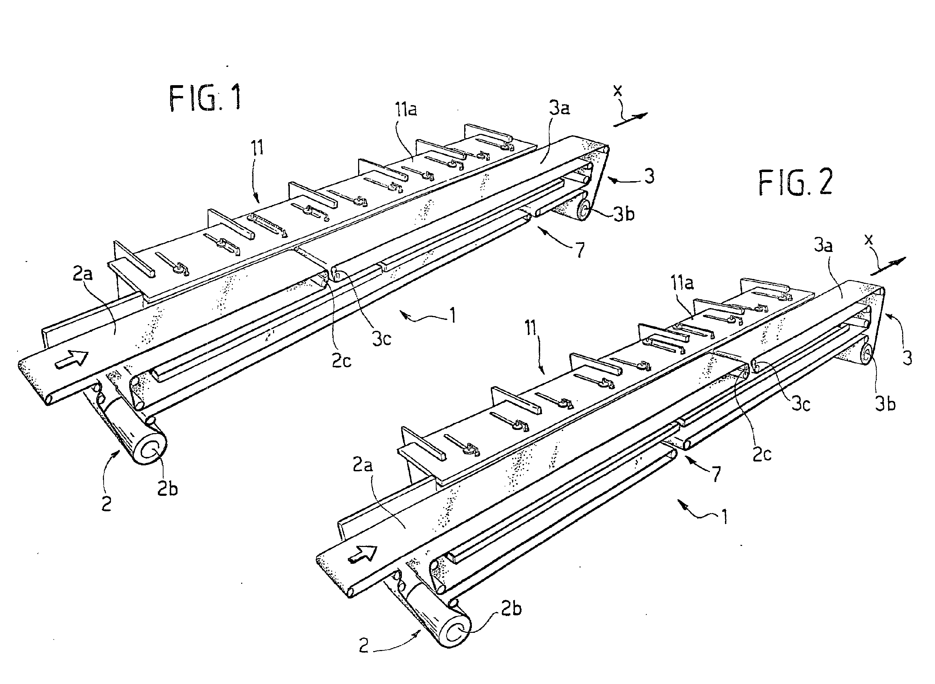

For simplicity of illustration, it is here assumed that the two conveying branches 2a and 3a, which extend along a conveying path on the whole oriented in the horizontal direction, are set in such a way that the articles conveyed advance from left to right as viewed both in Figure 1 and in Figure 2. This means in other words that the first conveying branch 2a is "upstream" of the second conveying branch 3a.

The articles being conveyed have not been illustrated in order to simplify the graphical representation. These may be articles of any type or nature, for example products undergoing packaging in an automatic packaging plant.

The paths of winding of the belts 2 and 3 are such that each belt winds on a plurality of idler or transmission elements consisting, for instance, of rollers.

In particular, the presence is envisaged of two main rollers 2b, 3b, usually of a larger diameter than the other rollers, which are designed to perform the function of drive rollers, namely of rollers which, being rotated by a respective motor (not illustrated, but of a known type), impart on the respective belt 2, 3 a movement of advance along the winding path, the aim of the foregoing being that the conveying branches 2a, 3a will exert the desired conveying action (from left to right as viewed in Figures 1 and 2).

The reference numbers 2c, 3c designate a further two idler rollers/returnpins which occupy end positions of the conveying branches 2a and 3a, respectively.

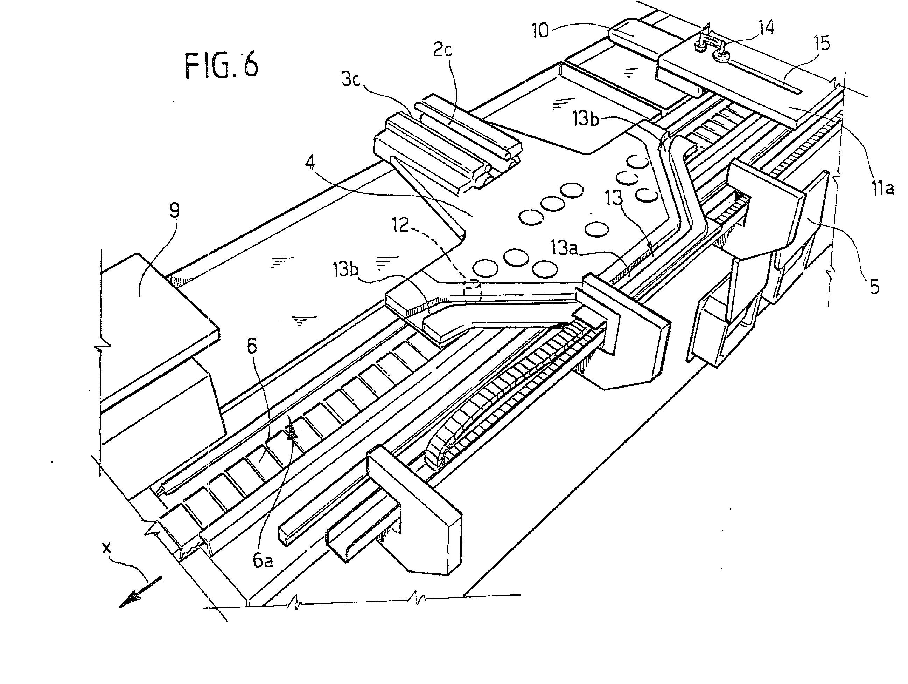

In particular, the roller/pin 2c is situated at the downstream end of the first conveying branch 2a. The roller/pin 3c is instead set at the upstream end of the second conveying branch 3a. The aforesaid rollers/pins 2c, 3c are situated in close proximity with respect to one another, being both carried by a structure substantially similar to a carriage, designated by 4 (see in particular Figure 6).

The carriage 4 is mounted on the frame 5 of the device in such a way that it can move in the general direction of conveyance (identified by the axis X in Figures 1, 2 and 6) in a position generically alongside the conveying path identified by the conveying branches 2a, 3a.

By selectively controlling the displacement of the carriage 4 along the axis X (a movement that can be controlled, for example, by means of a motor-driven chain 6 - see again Figure 6 - driven by a motor not specifically illustrated, but of a known type), it is therefore possible to displace selectively the rollers/pins 2c and 3c along the conveying path of the conveyor 1, at the same time maintaining their relationship of contiguity, which is important for ensuring proper transfer of the articles from the conveying branch 2a onto the conveying branch 3a.

In other words, by controlling displacement of the carriage 4 it is possible to bring about a spatial displacement of the downstream end of the first conveying branch 2a and of the upstream end of the second conveying branch 3a, and hence to vary selectively, and in a complementary way, the length of the first conveying branch 2a and the length of the second conveying branch 3a, the aim of the foregoing being that the overall length of the conveyor 1, and hence the sum of the lengths of the two conveying branches 2a and 3a, should remain constant. As has already been said in the introductory part of the present description, this possibility, perhaps combined with the possibility of controlling advance of the conveying branches 2a and 3a with different modalities, makes it possible to intervene in various ways on the movement and on the conditions of feed of the articles that are being conveyed.

The above corresponds to principles and criteria that are well known to the prior art, hence ones such as not to require any detailed description herein. This applies also as regards the provision of a further carriage, designated by the reference number 7 in Figures 1, 2 and 3. The carriage 7 in turn carries two rollers/pins one for winding the belt 2 and the other for winding the belt 3. Moving in a complementary way with respect to the carriage 4 that carries the rollers/pins 2c and 3c, the carriage 7 enables compensation of the variation in the lengths of the conveying branches 2a and 3a, preventing said variation in length from giving rise to undesired phenomena of slackening of the corresponding belts.

Even though Figures 1 and 2 show two possible conditions of regulation of the conveyor 1 that are quite close to one another, the possible range of displacement of the downstream and upstream ends, respectively of the conveying branches 2a and 3a, may even be in the region of 1-2 metres.

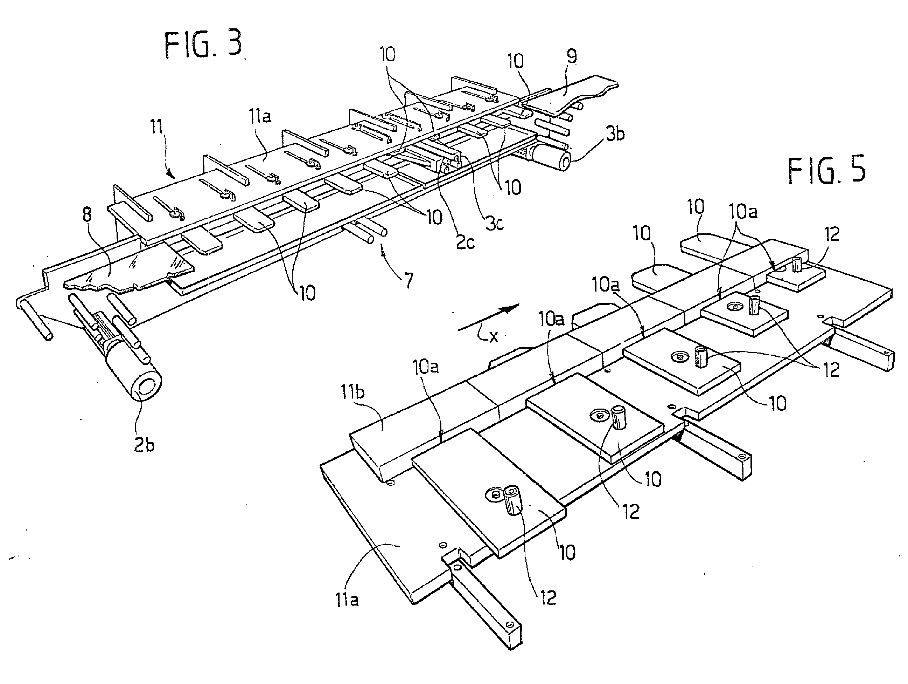

Figure 3 illustrates in greater detail the modalities adopted, according to a possible example of embodiment of the invention, for ensuring a firm and secure support for the conveying branches 2a and 3a of the conveyor without giving rise to undesired phenomena of interference with the movement of the rollers/pins 2c and 3c carried by the carriage 4.

In particular, the view shown in Figure 3 may be basically considered as a representation of the conveyor 1 as this is illustrated in Figure 2 after the belts 2 and 3 have been removed from the conveyor 1.

In the end regions (basically above the driving rollers 2b and 3b), the conveying branches 2a and 3a are supported by causing them to slide on top of respective horizontal plates 8 and 9. Instead, at the central portion of the conveyor 1, i.e., in a position corresponding to the area where the movement of the carriage 4 takes place, the function of support for the conveying branches 2a, 3a is performed by a plurality of cantilever elements 10 which can project horizontally starting from a supporting structure 11. Preferably, the structure 11 is in a position generically alongside the conveying branches 2a and 3a and is closed at the top by a plate 11a.

As may be more clearly seen in the view of Figure 5 (substantially a view from below of the plate 11a once this has been removed from the device 1), the cantilever elements 10 are slidably mounted inside respective channel formations 10a consisting of grooves made in a supporting counter-plate 11b fixed to the plate 11a. It will be appreciated that, with the plate 11a mounted on the conveyor 1, the counter-plate 11b extends in the conveying direction X. The cantilever formations 10 are thus able to slide with respect to the plate 11a in a direction orthogonal to the direction X.

In particular (see again Figure 3), the cantilever elements 10 are able to slide between two end positions, namely:
- an extended position, in which the element (or elements) 10 extends through the path of advance of the conveying branches 2a and 3a, in such a way as to able to support the said branches from underneath with a supporting action substantially similar to that exerted by the fixed plates 8 and 9; and
- a retracted or tucked-away position, in which the element (or elements) 10 is retracted completely underneath the plate 11a in such a way as not to interfere with the path of conveyance of the articles or, more precisely, with the movement of the rollers/pins 2c, 3c carried by the carriage 4.

The above arrangement may be immediately appreciated by looking at Figures 3, 4 and 5 jointly.

In particular, the view of Figure 3 refers to a situation in which of the ten cantilever elements 10 that are present in the conveyor 1 illustrated herein, the first five (starting from the fixed plate 8) are in the extended position. The next two cantilever elements 10 are in a retracted position beneath the plate 11a, and are in actual fact masked by the rollers 2c and 3c. Finally, the last three cantilever elements 10 (i.e., the ones closest to the plate 9) are again in the extended position.

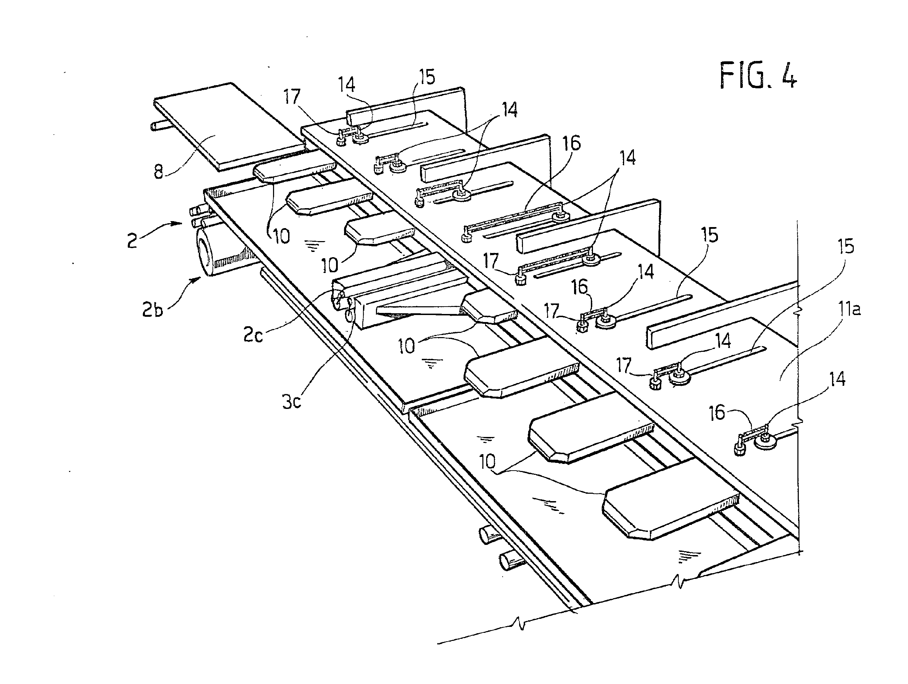

In the condition represented in Figure 4, the first two elements 10 (again starting from the plate 8) are in the completely extended position, whereas the next element 10 is illustrated in an intermediate position of its travel of return underneath the plate 11a. The element 10 immediately after is completely retracted underneath the plate 11a so as not to interfere with the movement of the rollers, whereas the adjacent cantilever element 10 is illustrated in an intermediate position of its travel of return from the retracted position underneath the plate 11a to the completely extended position. Finally, the remaining cantilever elements 10 (in the foreground of Figure 4) are illustrated in the completely extended position.

Basically, the solution according to the invention envisages that the cantilever elements 10 may project from their supporting structure 11 in such a way as to support a corresponding conveying branch (this may be either the first conveying branch 2a or the second conveying branch 3a, according to where the rollers 2c, 3c, and hence the carriage 4, are located at the particular moment), then to retract selectively inside the structure 11 (underneath the plate 11a) so as not to interfere with the movement of the carriage, and in particular of the rollers 2c, 3c, when the latter elements come to be in positions corresponding to the cantilever element or elements 10 each time involved.

In the examplary embodiment illustrated herein, which is purely an example, the cantilever elements 10 have a width (measured in the direction of conveyance X) in the region of 8-10 cm and are set apart at distances again in the region of 8-10 cm.

According to the specific requirements of application, it is of course possible to use either wider or narrower cantilever elements 10, as well as cantilever elements 10 set further apart or closer to one another than the values indicated.

In the examplary embodiment illustrated herein, the cantilever elements 10 consist of plate elements, made up, for instance, of pieces of metal material (for example, anodized aluminium), or else of plastic material, for example of the so-called self-lubricating type. The function of support for the conveying branches 2a, 3a, which move horizontally on top of the elements 10, is hence provided as if by a series of pads, in a sliding relationship.

In a possible variant of the invention, which is not illustrated, the elements 10 may comprise, or else made up of, rolling bodies, such as roller formations that are able to support, in a rolling relationship, the conveying branches 2a, 3a, the foregoing without any limitation to the possibility of the said elements 10 being extended and retracted with respect to the structure 11.

Yet again, even though in the example of embodiment illustrated herein the movement between the extended position and the retracted position occurs as a result of a movement in the horizontal direction, and in particular in a direction orthogonal to the direction of conveyance X, an result that is on the whole similar can be obtained by mounting the cantilever elements 10 in such a way that they can move in the vertical direction, namely between:
- a generically raised extended position, in which the elements 10 move underneath the conveying branches 2a, 3a, in such a way as to support them; and
- a lowered retracted position, in which the said elements 10 drop downwards so as to enable the rollers/pins 6 2c, 3c to pass on top of them.

The solution illustrated herein (movement of the cantilever elements 10 in the horizontal direction) is to be preferred in so far as it enables the members for supporting and moving the cantilever elements 10 to be kept on the whole disengaged with respect to the paths of movement of the belts 2 and 3 and of the elements on which said belts are wound.

The solution currently preferred for achieving the desired movement envisages that the elements 10 should be provided, on their bottom faces (see Figure 5), with cam follower elements consisting of pins or rollers 12, with their axes set in a vertical direction, which project like fingers from the bottom faces of the elements 10.

The elements 12 are designed to co-operate with a cam 13 basically consisting of a channel formation provided on the top face the carriage 4 which slides beneath the plate 11a.

The channel or groove defining the cam 13 usually comprises a central stretch 13a set in a position somewhat remote from the rollers 2c, 3c (hence from the conveying branches 2a and 3a), and two lateral or end stretches 13b somewhat close to the conveying branches 2a, 3a, there being also provided oblique connecting or radiusing stretches.

Preferably, the end branches 13b of the cam 13 extend on the prolongation of the external side 6a (i.e., the side facing the conveying branches 2a, 3a) of the chain 6 that moves the carriage 4.

In this way, the cam-follower elements 12 co-operate with the aforesaid side 6a (or, at least, they cannot back away from the side 6a itself). In this way, the elements 12 are "led into" the end branches 13b of the cam 13 at the moment in which, as a result of the movement of the carriage 4, the individual element 12 starts to co-operate with the cam 13 (see the element 12 illustrated with a dashed line in Figure 6). In this way, secure and regular engagement of the cam-follower elements 12 in the cam 13 is ensured.

In practice, when a given cam-follower element 12 is working in co-operation with the external side 6a of the chain 6 or with the end stretches 13b of the cam 13, the corresponding cantilever element 10 is in its extended position, in which it supports the conveying branch 2a or 3a.

Instead, when a cam-follower element 12 passes, as a result of the movement of the carriage 4 along the axis X controlled by the chain 6, from one of the end branches 13b to the central branch 13a of the cam 13, the corresponding cantilever element 10 is gradually recalled into the retracted position so as to disappear gradually underneath the plate 11a.

It will be noted that, at least in principle, the relative positions of the cam 13 and of the cam followers 12 could be reversed. In any case, the arrangement is such that, as the cam 13 that is present on the carriage 4 approaches each of the cantilever elements 10, it determines, as a result of its co-operation with the follower element 12 associated to the cantilever element 10 each time involved, displacement of the cantilever element 10 in question from the extended position towards the retracted position.

The fact that the cam 13 is associated to the carriage 4 ensures that the movement of return of the elements 10 into the retracted position of non-interference with the rollers 2c, 3c is controlled precisely by the carriage 4 which carries the aforesaid rollers.

From Figure 4 it may be noted that the movement of sliding of the elements 10 with respect to the plate 11a is rendered more regular, ensuring that the elements 10 are provided with pins 14 slidably mounted in corresponding slits 15 made in the plate 11a. Preferably, the pins 14 are connected to return springs 16 mounted in such a way that they turn in tension between the pin 14 and a detent pin 17 fixed on the top face of the plate 11a.

The springs 16 act in such a way as to apply, on the elements 10, an elastic pre-loading towards the extended position. The presence of said elastic pre-loading proves advantageous in terms of elimination of undesired phenomena of vibration.

Of course, without prejudice to the principle of the invention, the details of construction and the embodiments may vary widely with respect to what is described and illustrated herein, without thereby departing from the scope of the present invention as defined in the attached claims.

## Claims

1. A supporting device for belt conveyors (1) comprising:
- a first conveying branch (2a) with a downstream end (2c); and
- a second conveying branch (3a) set cascaded to the first conveying branch (2a) along a general conveying path, the second conveying branch (3a) having an upstream end (3c) set in a relationship of contiguity with the downstream end (2c) of the first conveying branch (2a), the downstream end (2c) of the first conveying branch (2a) and the upstream end (3c) of the second conveying branch (3a) being jointly mobile along said general conveying path (X) whilst maintaining the aforesaid relationship of contiguity,
**characterized in that** the supporting device comprises a plurality of cantilever elements (10) which are able to support said first conveying branch (2a) and said second conveying branch (3a), said cantilever elements (10) being selectively mobile between:
- an extended position, in which said cantilever elements (10) extend through the path of conveyance (X) so as to support one between said first conveying branch (2a) and said second conveying branch (3a); and
- a retracted position, in which said cantilever elements (10) are disengaged from said conveying path (X) so as to enable movement of said downstream end (2c) of the first conveying branch (2a) and of said upstream end (3c) of the second conveying branch (3a) along said conveying path.

2. The device according to Claim 1, **characterized in that** said cantilever elements (10) have a pad-like structure, thus being able to co-operate in a sliding relationship with said first conveying branch (2a) and said second conveying/branch (3a).

3. The device according to Claim 1, **characterized in that** said cantilever elements (10) have associated to them rolling bodies, such as rollers, capable of cooperating in a rolling relationship with said first conveying branch (2a) and said second conveying branch (3a).

4. The device according to any one of the preceding claims, **characterized in that** it comprises a supporting structure (11) for said cantilever elements (10), said cantilever elements (10) being mounted on said supporting structure (11) with the possibility of moving between said extended position and said retracted position in a substantially horizontal direction.

5. The device according to Claim 4, **characterized in that** said supporting structure (11) for supporting said cantilever elements (10) is set in a position generically alongside said conveying branches (2a, 3a).

6. The device according to Claim 4 or Claim 5, **characterized in that** said supporting structure (11) comprises channel-shaped formations (10a) defining guiding and sliding structures for said cantilever elements (10).

7. The device according to any one of the preceding claims, **characterized in that**:
- said downstream end (2c) of said first conveying branch (2a) and said upstream end (3c) of said second conveying branch (3a) are mounted on a carriage structure (4) that is mobile along said conveying path (X);
- said carriage structure (4) and said cantilever elements (10) are provided with at least one cam formation (13) and with respective cam-follower elements (12) that are able to co-operate in a relationship of following with said cam (13); the arrangement being such that, as said carriage structure (4) approaches each of said cantilever elements (10), said at least one cam formation (13) and said respective cam-follower elements (12) co-operate in a relationship of following, so determining displacement of the cantilever element (10) each time involved from said extended position towards said retracted position.

8. The device according to Claim 7, **characterized in that** said at least one cam (13) is associated to said carriage structure (4) and comprises:
- a central stretch (13a) set in a position somewhat remote from said conveying branches (2a, 3a); and
- two end stretches (13b) set in a position somewhat close to said conveying branches (2a, 3a).

9. The device according to Claim 8, **characterized in that** said carriage structure (4) is actuated by an elongated motor-driven element (6) having a side (6a) that is able to constitute a containment surface for said cam-follower elements (12), said containment surface extending in a relationship of connection with said end stretches (13b) of said cam.

10. The device according to Claim 9, **characterized in that** said elongated motor-driven element is a motor-powered chain (6).

11. The device according to any one of Claims 7 to 10, **characterized in that**:
- said cantilever elements (10) are slidably mounted on a plate (11a) carried by said supporting structure (11); and
- said carriage structure (4) moves underneath said plate (11a) in a position generically lower than said cantilever elements (10).

12. The device according to Claim 11, **characterized in that** said cantilever elements (10) are provided with pin parts (14), which extend and are able to slide in corresponding slits (15) provided in said supporting plate (11a).

13. The device according to any one of the preceding claims, **characterized in that** said cantilever elements (10) carry associated to them elastic means (16) of return towards said extended position.

14. The device according to Claims 12 and 13, **characterized in that** said elastic means comprise a spring (16) acting between said pin parts (14) and hooking elements (17) provided on said supporting plate.

15. The device according to any one of the preceding claims, **characterized in that** said cantilever elements (10) are made of metal material or plastic material, preferably with self-lubricating characteristics.

16. The device according to any one of the preceding claims, **characterized in that** said first conveying branch (2a) and said second conveying branch (3a) are branches of corresponding loop belts (2, 3) with associated thereto respective motor drives (2b, 3b).

17. The device according to Claim 16, **characterized in that** said loop belts (2, 3) have associated thereto tensioning means (7) for maintaining the condition of tensioning of said loop belts (2, 3) during movement of said downstream end (2c) of said first conveying branch (2a) and said upstream end (3c) of said second conveying branch (3a) along said general conveying path (X) .
